# EUROPÄISCHE PATENTSCHRIFT

(11) **EP 0 594 987 B1**
(45) Veröffentlichungstag und Bekanntmachung des Hinweises auf die Patenterteilung: **23.10.1996**
(21) Anmeldenummer: 93114234.3
(22) Anmeldetag: 06.09.1993
(51) Int. Cl.: G02F 1/13, H01R 23/72

(54) **Elektrische Baugruppe**
Electric module
Module électrique

(30) Priorität: 28.10.1992 DE 4236353
(43) Veröffentlichungstag der Anmeldung: 04.05.1994
(73) Patentinhaber: Preh-Werke GmbH & Co. KG, 97616 Bad Neustadt (DE)
(72) Erfinder: Bauer, Karl-Heinz, D-97616 Bad Neustadt a.d. Saale (DE); Brüggemann, Ulrich, Dipl.-Ing., D-97618 Heustreu (DE)

(56) Entgegenhaltungen:
- BE-A- 881 912
- DE-U- 8 805 722
- US-A- 4 789 224

## Beschreibung

Die Erfindung betrifft eine elektrische Baugruppe mit einem Flüssigkristalldisplay auf einer Leiterplatte und mit einem Abschirmblech gemäß dem Oberbegriff des Anspruches 1.

Eine solche Baugruppe beschreibt die BE 881 912. Eine Kombination bestehend aus einer Leiterplatte, einem Flüssigkristalldisplay und aus Kontakt- bzw. Abstandselementen ist von einem Abschirmblech funktionsfähig zusammengehalten. Dabei überlappt das Abschirmblech die Kombination an drei Seiten, die vierte Seite dient der Anschlußkontaktierung. Bei der mechanisch sehr stabilen Anordnung ist allerdings ein im nachhinein erkannter Defekt nur aufwendig zu beheben und führt bei derartigem Aufbau meist zum Verlust der Baugruppe.

Eine Leiterplatte mit aufgeschraubtem Lichtleiter zeigt die DE 32 47 531 A1. Der Lichtleiter trägt auf seiner Oberfläche mehrere Flüssigkristallanzeigen, denen Rippen des Lichtleiters bestimmte Positionen zuweisen.

Baugruppen der bezeichneten Art sind an elektrischen Geräten häufig anzutreffen. Sie befinden sich beispielsweise hinter Gerätefrontblenden, die eine Informationsfläche des Flüssigkristalldisplays betrachterseitig einrahmen. Oftmals sind solche Frontblenden zusätzlich mit Tasten ausgerüstet, die einem Benutzer beispielsweise gestatten, auf dem Flüssigkristall ablesbare Informationen zu beeinflussen. Solche Tasten und möglicherweise weitere Bauelemente, wie z.B. Widerstände, Kondensatoren, Dioden, ICs usw. sowie auch Lichtleiter mit Lichtquelle befinden sich dabei häufig mit dem Flüssigkristalldisplay auf einer gemeinsamen Leiterplatte.

Die bekannten Baugruppen sind mit einem Abschirmblech ausgestattet, um den Einfluß thermischer oder elektrischer Strahlung zu mindern. Bei Baugruppen, die orts- oder zeitversetzt zum Endprodukt erstellt sind oder bei Geräten, deren Frontblende einschließlich einer elektrischen Baugruppe gewollt abnehmbar ist, z.B. aus Gründen des Diebstahlschutzes etwa an Autoradios, wird das Abschirmblech der Baugruppe auch, und mitunter sogar überwiegend als Montagerahmen für die Baugruppe selbst oder zur Halterung und Versteifung der Baugruppe genutzt.

Um ein Flüssigkristalldisplay an einer Leiterplatte zu halten, werden oftmals eigens für derartige Displays konzipierte Aufnahmen verwendet. Eine derartige Aufnahme enthält eine Anzahl Kontaktelemente, die ein Flüssigkristalldisplay elastisch kontaktieren und mit korrespondierend vorgesehenen Kontaktflächen z.B. einer Leiterplatte verbinden. Kontaktelemente können auch als Leitgummistreifen ausgebildet sein, mit einer wechselweisen Aneinanderreihung elektrisch isolierender und elektrisch leitender Segmente. Die zwischen den Kontaktelementen und den Kontaktflächen des Flüssigkristalldisplays zwecks einwandfreier Kontaktierung erforderliche Andrückkraft wird entweder durch eine entsprechende Gestaltung der Kontaktelemente z.B. als Gabelfeder von diesen selbst oder durch ein zusätzliches, auf die Aufnahme aufgesetztes Halte- bzw. Rahmenteil erzeugt. (DE-C1-37 26 225, DE-A1-41 05 505, EP-A2-0 493 071, DE-U-87 05 715, DE-U-88 01 014, DE-U-88 05 722). Bei solchen Anordnungen zur lösbaren Halterung eines Flüssigkristalldisplays auf einer Leiterplatte, werden auch bei Hinterleuchtung des Flüssigkristalldisplays stets zusätzliche Teile benötigt, die dazu dienen, die Kontaktelemente oder das Flüssigkristalldisplay lagerichtig zu halten oder die Kontaktierung zu gewährleisten.

Es war daher Aufgabe der Erfindung, eine elektrische Baugruppe der eingangs bezeichneten Art hinsichtlich ihres mechanischen Aufbaues so zu gestalten, daß sie ohne zusätzliche Teile zu benötigen mit wenig Aufwand funktionsfähig zusammenzusetzen ist und diesen Zustand z.B. für Funktionsüberprüfung oder für Zwischenlagerung bzw. -transport bis zum endgültigen Einbau erhalten kann und daß sie bedarfsweise mit ebensowenig Aufwand zerlegbar ist.

Zur Lösung der Aufgabe ist erfindungsgemäß vorgeschlagen, daß die Untergruppe nur an einer Seite zusammengehalten wird und auf der gegenüberliegenden Seite an einer Abwinkelung des Abschirmbleches klemmend anliegt und daß der Endabschnitt eine parallel zum Rand verlaufende Durchbiegung aufweist, die im Abstand zum Rand federnd auf der Untergruppe aufliegt. Die vorgeschlagene elektrische Baugruppe ist in vorteilhafter Weise ohne Werkzeuge selbsthaltend zusammensetzbar, sie ist funktionsfähig und kann geprüft, transportiert und gelagert werden, und sie kann bedarfsweise ohne Werkzeuge zu gebrauchen wieder demontiert werden.

Beim Zusammenbau der Baugruppe werden zunächst die Bestandteile der Untergruppe, z.B. Leiterplatte, Flüssigkristalldisplay und Kontaktierungseinrichtung, sandwichartig zusammengesetzt. Dann wird die zusammengesetzte Untergruppe mit ihrer zur Kontaktierung vorgesehenen Längsseite mit Schwenken unter den Endabschnitt eines vorgefertigten Abschirmbleches geschoben. Die gegenüberliegende Längsseite der Untergruppe gleitet in der Endphase des Zusammenbaus an der Abwinkelung des Abschirmbleches entlang und setzt sich in der Endstellung klemmend fest. Das Abschirmblech hält die Baugruppe lösbar und schützt sie zugleich gegen ungewollte mechanische Belastungen.
Spezielle, kostenaufwendige Vorrichtungen und Werkzeuge sind für den Zusammenbau nicht erforderlich, und auch nicht für eine eventuelle Demontage der Baugruppe in umgekehrter Arbeitsgangfolge.

Gemäß einer Ausgestaltung der Erfindung ist der Durchbiegung des Endabschnittes eine Sicke des Abschirmbleches zugeordnet. Auf der Sicke lagert die montierte Untergruppe. Die gegenseitige Ausrichtung von Sicke und Durchbiegung erleichtert das Einsetzen der Untergruppe unter den Endabschnitt und verringert die dabei entstehende Dehnbeanspruchung des Endabschnittes.

Das Abschirmblech und sein Endabschnitt haben zusammen die Wirkung einer elastischen Klammer, die zum einen die Kontaktierung sichert und zum anderen den Aufbau der Baugruppe zusammenhält. Ein separates Teil eigens zum Niederhalten des Flüssigkristalldisplays wird nicht benötigt.

In weiteren Ausgestaltungen der Erfindung sind Leiterplatte und Lichtleiter bzw. Lichtleiter und Flüssigkristalldisplay durch entsprechende Vorkehrungen gegenseitig ausrichtbar. Den Aufbau der Baugruppe insbesondere mit vereinfachend ist die Halterung des zur Kontaktierung vorgeschlagenen Leitgummistreifens innerhalb des Lichtleiters. Weitere vorteilhafte Ausgestaltungen sind den Unteransprüchen zu entnehmen.

Ein Ausführungsbeispiel der Erfindung ist nachstehend anhand von Zeichnungen beschrieben. Es zeigen:
- Figur 1: die Außenansicht einer Geräte-Frontblende mit Bedienungstasten und dem Flüssigkristalldisplay einer zugeordneten elektrischen Baugruppe,
- Figur 2: die Baugruppe aus Figur 1, geschnitten längs der Linie A-A dargestellt.

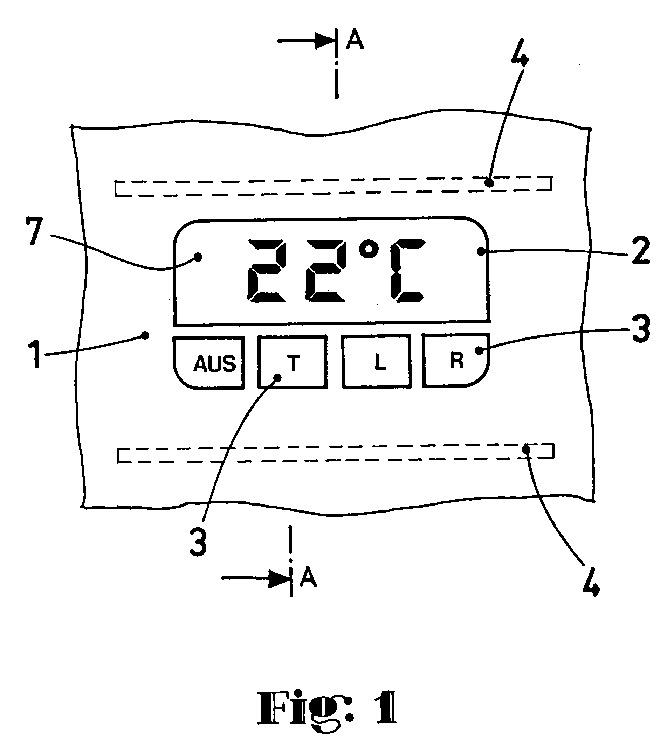

Figur 1 zeigt die Frontblende eines nicht dargestellten Elektrogerätes, benutzerseitig gesehen. Die Frontblende (1) ist mit einem Fenster (2) ausgestattet, in dem durch Tasten (3) abrufbare Informationen erkennbar sind. Mit rückseitig vorhandenen Stegen (4) ist die Frontblende (1) am Elektrogerät zu befestigen. Die Stege (4) werden auch zur Halterung der elektrischen Baugruppe (5) genutzt. Die Baugruppe ist mit einem Flüssigkristalldisplay (6) ausgestattet, deren Anzeigefläche (7) am Fenster (2) der Frontblende (1) anliegt.

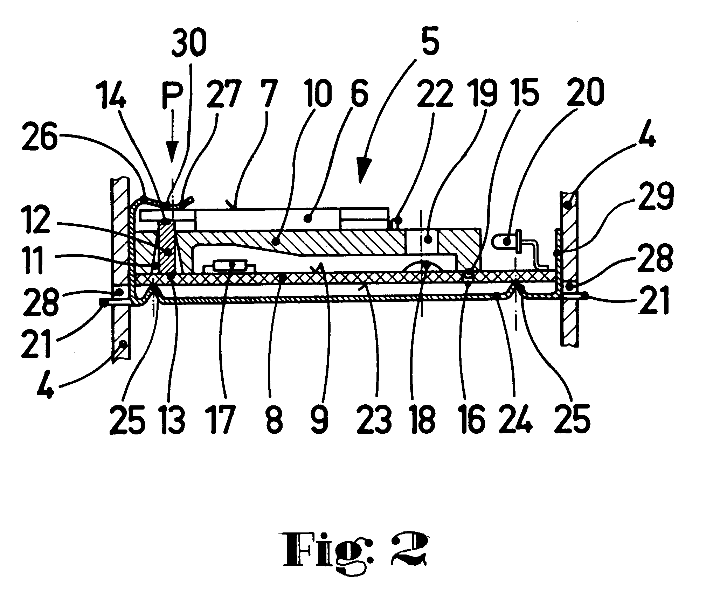

Die elektrische Baugruppe (5) enthält als Untergruppe im wesentlichen eine bestückte Leiterplatte (8), einen Lichtleiter (10) und ein Flüssigkristalldisplay (6). Die Schaltung der Leiterplatte (8) ist über nicht dargestellte Anschlußeinrichtungen mit dem Elektrogerät elektrisch verbunden (Fig. 2). Die Leiterplatte (8) trägt auf ihrer der Frontblende (1) zugewandten Oberseite (9) einen Lichtleiter (10).

Der Lichtleiter (10) hält in einer zur Leiterplatte (8) hin leicht konisch gestalteten, fensterartigen Ausnehmung (11) einen Leitgummistreifen (12). Der Leitgummistreifen (12) liegt mit seiner einen Kontaktfläche (13) gemeinsam mit dem Lichtleiter (10) auf der Leiterplatte (8) auf, mit seiner gegenüberliegenden Kontaktfläche (14) überragt er den Lichtleiter (10). Für eine lange Kontaktreihe wählt man mehrere fensterartige Ausnehmungen (11) und entsprechend unterteilte Leitgummistreifen (12). Leitgummistreifen (12) sind handelsüblich, sie bestehen aus elektrisch leitenden und elektrisch isolierenden Abschnitten, die sich in Längsrichtung des Leitgummistreifens in Abständen von wenigen Zehntel Millimetern abwechseld aneinanderreihen. Der Lichtleiter (10) ist anhand angeformter Zapfen (15), die in Bohrungen (16) eingreifen, an der Leiterplatte (8) ausgerichtet, und gegen Verschieben gesichert. Auf der Oberfläche (9) der Leiterplatte (8) sind nach Bedarf und nach verfügbarer Fläche bzw. verfügbarem Raum Bauelemente der Schaltung angeordnet, z.B. Widerstände (17); der Schaltkontakt (18) ist durch eine Freisparung (19) des Lichtleiters (10) hindurch von einer Taste (3) der Frontblende (1) zu betätigen; die Lampe (20) speist den Lichtleiter (10) mit Licht. Auf dem Lichtleiter (10) ist ein Flüssigkristalldisplay (6) auf Abstand zur Leiterplatte (8) angeordnet. Die Anschlußflächen des Flüssigkristalldisplays (6) liegen dabei auf der gegenüberliegenden Kontaktfläche (14) des Leitgummistreifens (12) auf und sind über dessen elektrisch leitenden Abschnitte mit der Leiterplatte (8) verbunden. Dem Lichtleiter sind Stege (22) angeformt, die hinsichtlich ihrer Verteilung der Kontur des Flüssigkristalldisplays (6) entsprechen und dessen Sollposition markieren. Das Flüssigkristalldisplay ist durch die Stege (22) gegen seitliches Verschieben geschützt.

Neben der Untergruppe enthält die Baugruppe (5) ein Abschirmblech (24), das die Untergruppe aufnimmt und das im wesentlichen parallel zur Unterseite (23) der Leiterplatte (8) der Untergruppe verläuft und das sich durch Sicken (25) gegen letztere abstützt. Ein Schenkel (26) des Abschirmbleches (24) ist einseitig um den Rand der Leiterplatte (8) herumgeführt. Der Schenkel (26) liegt mit einer Durchbiegung (30) seines Endabschnittes (27) in Linie parallel zu den Anschlußflächen des Flüssigkristalldisplays (6) etwa in Höhe des Leitgummistreifens (12) elastisch auf dem Flüssigkristalldisplay (6) auf und erzeugt eine zur Kontaktsicherung erforderliche Andrückkraft (P). Liegt die Berührungslinie des Endabschnittes (27) weiter entfernt vom Rand der Leiterplatte (8) als die dem Endabschnitt zugeordnete Sicke (25) auf der Unterseite der Leiterplatte, so entsteht eine Hebelwirkung, welche die Anordnung der Baugruppe in gegenseitiger Ausrichtung klammerartig zusammenhält. Das Abschirmblech (24) ist an der Seite, die dem Schenkel (26) gegenüberliegt mit einer Abwinkelung (29) versehen. Der Abstand der Abwinkelung (29) vom Schenkel (26) orientiert sich am entsprechenden Maß der aufzunehmenden Leiterplatte (8). Die Leiterplatte (8) liegt klemmend an der Abwinkelung (29) an. Der so geschaffene mechanische Verbund der Baugruppe (5) hält ausreichend bis zum endgültigen Einbau. Die Baugruppe (5) ist mittels ausgestellten Zungen (21) des Abschirmbleches (24) in Öffnungen (28) der Stege (4) an der Frontblende (1) gehalten.

Der Zusammenbau der Baugruppe (5) erfolgt, indem zunächst der Lichtleiter (10) mit dem darin eingesetzten Leitgummistreifen (12) auf die bebestückte Leiterplatte (8) aufgesetzt und an den Bohrungen (16) ausgerichtet wird, dann das Flüssigkristalldisplay (6) auf dem Lichtleiter (10) plaziert und nachfolgend das gesamte, eine Untgergruppe darstellende Paket unter Schwenken unter den Endabschnitt (27) des Schenkels (26) geschoben wird. Dabei wird der Endabschnitt (27) gespannt.

### Bezugszeichenliste 02/92 Pt.

- 1: Frontblende
- 2: Fenster
- 3: Tasten
- 4: Steg
- 5: elektrische Baugruppe
- 6: Flüssigkristalldisplay
- 7: Anzeigefläche
- 8: Leiterplatte
- 9: Oberseite
- 10: Lichtleiter
- 11: Ausnehmung
- 12: Leitgummistreifen
- 13: Kontaktfläche
- 14: Kontaktfläche
- 15: Zapfen
- 16: Bohrung
- 17: Widerstand
- 18: Schaltkontakt
- 19: Freisparung
- 20: Lampe
- 21: Zunge
- 22: Stege
- 23: Unterseite
- 24: Abschirmblech
- 25: Sicke
- 26: Schenkel
- 27: Endabschnitt
- 28: Öffnung
- 29: Abwinkelung
- 30: Durchbiegung
- P: Andrückkraft

## Patentansprüche

1. Elektrische Baugruppe (5) mit einer sandwichartigen zusammengesetzten Untergruppe (6,8,10,12), die zumindest eine Leiterplatte (8), ein Flüssigkristalldisplay (6) und eine Einrichtung (10,12) zur Lagerung und Kontaktierung des Flüssigkristalldisplays (6) umfaßt, und mit einem Abschirmblech (24) an der Rückseite (23) der Untergruppe (6,8,10,12), das die Untergruppe aufnimmt und das einen Teil des Randes der Untergruppe umgreifend mit einem Endabschnitt (27) die Untergruppe (6,8,10,12) zusammenhält,
dadurch gekennzeichnet,
daß die Untergruppe (6,8,10,12) nur an einer Seite zusammengehalten wird und auf der gegenüberliegenden Seite an einer Abwinkelung (29) des Abschirmbleches (24) klemmend anliegt und daß der Endabschnitt (27) eine parallel zum Rand verlaufende Durchbiegung (30) aufweist, die im Abstand zum Rand federnd auf der Untergruppe (6,8,10,12) aufliegt.

2. Elektrische Baugruppe nach Anspruch 1,
dadurch gekennzeichnet,
daß das Abschirmblech (24) an der Rückseite (23) der Untergruppe eine oder mehrere, die Untergruppe (6,8,10,12) abstützende Sicke (25) aufweist und eine Sicke (25) der Durchbiegung (30) zugeordnet ist.

3. Elektrische Baugruppe nach Anspruch 1 oder Anspruch 2,
dadurch gekennzeichnet,
daß die Einrichtung (10,12) ein Lichtleiter (10) ist mit einem Durchbruch (11) zur Halterung von Kontaktelementen (12) für die Kontaktierung von Flüssigkristalldisplay (6) und Leiterplatte (8).

4. Elektrische Baugruppe nach Anspruch 3,
dadurch gekennzeichnet,
daß zur Kontaktierung ein Leitgummistreifen (12) benutzt ist.

5. Elektrische Baugruppe nach einem der Ansprüche 1 bis 4,
dadurch gekennzeichnet,
daß die Durchbiegung (30) in Höhe der Kontaktierung (13,14) auf die Untergruppe drückt.

6. Elektrische Baugruppe nach einem der Ansprüche 1 bis 5,
dadurch gekennzeichnet,
daß die Leiterplatte (8) der Untergruppe (6,8,10,12) an der Abwinkelung (29) anliegt.

7. Elektrische Baugruppe nach einem der Ansprüche 1 bis 6,
dadurch gekennzeichnet,
daß die Leiterplatte (8) Bohrungen (16) aufweist, auf deren Rand sich der Lichtleiter (10) abstützt und in die er mittels angeformter Zapfen (15) verschiebefest eingreift.

8. Elektrische Baugruppe nach einem der Ansprüche 1 bis 7,
dadurch gekennzeichnet,
daß eine Fläche des Lichtleiters (10) das Flüssigkristalldisplay (6) an Markierungen (22) ausgerichtet auf Abstand zur Leiterplatte (8) trägt.

## Claims

1. Electrical assembly (5) having a sub-assembly (6, 8, 10, 12) which is put together in a sandwich-like manner and includes at least a printed-circuit board (8), a liquid-crystal display (6) and a device (10, 12) for mounting and contacting the liquid-crystal display (6), and having a screening plate (24) on the rear side (23) of the sub-assembly (6, 8, 10, 12) and which receives the sub-assembly and, overlapping one portion of the edge of the sub-assembly, holds together the sub-assembly (6, 8, 10, 12) by means of an end section (27), characterised in that the sub-assembly (6, 8, 10, 12) is held together on only one side, and on the opposite side rests in a clamp-like manner against a bend (29) of the screening plate (24), and in that the end section (27) has a flexure (30) which extends in a manner such that it is parallel to the edge, and which rests in a spring-like manner on the sub-assembly (6, 8, 10, 12) at a distance from the edge.

2. Electrical assembly according to claim 1, characterised in that, on the rear side (23) of the sub-assembly, the screening plate (24) has one or more beads (25) which support the sub-assembly (6, 8, 10, 12), and one bead (25) is allocated to the flexure (30).

3. Electrical assembly according to claim 1 or claim 2, characterised in that the device (10, 12) is a light guide (10) having an opening (11) for holding contact elements (12) for contacting the liquid-crystal display (6) and the printed-circuit board (8).

4. Electrical assembly according to claim 3, characterised in that a conducting rubber strip (12) is used for the contacting.

5. Electrical assembly according to one of the claims 1 to 4, characterised in that the flexure (30) presses onto the sub-assembly at the level of the contacting (13, 14).

6. Electrical assembly according to one of the claims 1 to 5, characterised in that the printed-circuit board (8) rests against the sub-assembly (6, 8, 10, 12) at the bend (29).

7. Electrical assembly according to one of the claims 1 to 6, characterised in that the printed-circuit board (8) has bores (16), on the edge of which is supported the light guide (10) and in which the light guide engages by means of preformed pegs (15) in a manner such that it cannot be shifted.

8. Electrical assembly according to one of the claims 1 to 7, characterised in that a surface of the light guide (10) supports the liquid-crystal display (6) at a distance from the printed-circuit board (8), in a manner such that it is aligned with respect to markings (22).

## Revendications

1. Module électrique (5) comprenant un sous-ensemble (6, 8, 10, 12) à assemblage du type sandwich, comportant au moins une plaquette imprimée (8), un affichage (6) à cristaux liquides et un dispositif (10, 12) conçu pour le montage et la mise en contact de l'affichage (6) à cristaux liquides ; et, à la face postérieure (23) du sous-ensemble (6, 8, 10, 12), une tôle de blindage (24) qui reçoit le sous-ensemble et assure la cohésion de ce sous-ensemble (6, 8, 10, 12) en ceinturant, par une région extrême (27), une partie du bord dudit sous-ensemble,
caractérisé par le fait
que la cohésion du sous-ensemble (6, 8, 10, 12) est assurée uniquement d'un côté et ledit sous-ensemble porte du côté opposé, avec effet de coincement, contre un coude (29) de la tôle de blindage (24) ; et par le fait que la région extrême (27) présente un cintrage (30) qui s'étend parallèlement au bord et est appliqué élastiquement sur le sous-ensemble (6, 8, 10, 12), à distance du bord.

2. Module électrique selon la revendication 1,
caractérisé par le fait
que la tôle de blindage (24) comporte, à la face postérieure (23) du sous-ensemble, une ou plusieurs moulure(s) empreinte(s) (25) offrant un appui audit sous-ensemble (6, 8, 10, 12), et une moulure empreinte (25) est affectée au cintrage (30).

3. Module électrique selon la revendication 1 ou la revendication 2,
caractérisé par le fait
que le dispositif (10, 12) est un guide de lumière (10), muni d'un évidement (11) destiné à retenir des éléments de contact (12) pour la mise en contact de l'affichage (6) à cristaux liquides et de la plaquette imprimée (8).

4. Module électrique selon la revendication 3,
caractérisé par le fait
qu'une bande conductrice (12) en caoutchouc est utilisée pour la mise en contact.

5. Module électrique selon l'une des revendications 1 à 4,
caractérisé par le fait
que le cintrage (30) exerce une pression sur le sous-ensemble à la hauteur de la mise en contact (13, 14).

6. Module électrique selon l'une des revendications 1 à 5,
caractérisé par le fait
que la plaquette imprimée (8) du sous-ensemble (6, 8, 10, 12) porte contre le coude (29).

7. Module électrique selon l'une des revendications 1 à 6,
caractérisé par le fait
que la plaquette imprimée (8) comporte des trous (16) sur le bord desquels le guide de lumière (10) prend appui, et dans lesquels il pénètre sans aucune faculté de coulissement, au moyen de tenons (15) venus solidairement de moulage.

8. Module électrique selon l'une des revendications 1 à 7,
caractérisé par le fait
qu'une surface du guide de lumière (10) porte, à distance de la plaquette imprimée (8), l'affichage (6) à cristaux liquides qui est aligné sur des repères (22).
